# EUROPEAN PATENT APPLICATION

(11) **EP 4 657 286 A1**
(43) Date of publication of application: **03.12.2025**
(21) Application number: 25177007.9
(22) Date of filing: 16.05.2025
(51) Int. Cl.: G06F 21/10, G06F 21/64, G06F 40/30, G06N 3/0442, G06N 3/045

(54) **TRANSFORMER-BASED CONTENT PROCESSING APPARATUSES FOR MULTIMODAL CONTENT AUTHENTICATION**

(30) Priority: 31.05.2024 US 202418680977
(71) Applicant: Microsoft Technology Licensing, LLC, Redmond, WA 98052-6399 (US)
(72) Inventor: Qin, Yinghua, Redmond, WA, 98052 (US)
(74) Representative: Grünecker Patent- und Rechtsanwälte PartG mbB

(57) **Abstract**

According to examples, a transformer-based content processing apparatus determines if received content for verification is authentic content based on corresponding evidence content retrieved from authenticated data sources. A Contrastive Language-Image Pre-training (CLIP) model is used to extract features of the content for verification and the evidence content. A Gated Recurrent Unit (GRU) model generates a text representation and a corresponding image representation from the features. The text representation and the corresponding image representation are enhanced via a series of operations executed by additional layers of the GRU model which also generate multiple probabilities that the content for verification is authentic, inauthentic content, or content of indeterminate authenticity.

## Description

### BACKGROUND

Access to and control of information is the defining aspect of the current 'Information Age'. Websites, social media platforms, and other online information sources feature digitized data including a variety of multimedia elements, such as but not limited to text, images, and videos. Furthermore, various sophisticated data generation and manipulation technologies are available to not only manipulate existing digital content but also to generate content such as digitized images and videos of artificial entities that do not exist in reality. The generation of artificial content in benign applications such as entertainment is desirable. However, the artificial digital content thus generated also enables mischief such as generating misinformation or even compromising the security of digital or other resources.

### BRIEF DESCRIPTION OF DRAWINGS

Features of the present disclosure are illustrated by way of examples shown in the following figures. In the following figures, like numerals indicate like elements, in which:
FIG. 1A shows a block diagram of a transformer-based content processing apparatus that determines the authenticity or veracity of content, in accordance with an embodiment of the present disclosure;
FIG. 1B shows an arrangement of the various models in the transformer-based content processing apparatus shown in FIG. 1A, in accordance with an embodiment of the present disclosure;
FIG. 2A shows a block diagram of the Contrastive Language-Image Pre-training (CLIP) model, in accordance with an embodiment of the present disclosure;
FIG. 2B shows a block diagram of the series of operations carried out to enhance the representations shown in FIG. 2A, in accordance with an embodiment of the present disclosure;
FIG. 3 shows a flowchart of a method of authenticating content as implemented by the content processing apparatus depicted in FIG. 1A, in accordance with an embodiment of the present disclosure;
FIG. 4 shows a flowchart of a method of authenticating received content as implemented by the content category identifier depicted in FIG. 1A, in accordance with an embodiment of the present disclosure;
FIG. 5 shows a graph of the accuracy of the Gated Recurrent Unit (GRU) models in authenticating content, in accordance with the embodiments of the present disclosure; and
FIG. 6, shows a block diagram of a computer-readable medium that has stored thereon certain data structures and computer-readable instructions for determining the authenticity of the received content, in accordance with an embodiment of the present disclosure.

### DETAILED DESCRIPTION

For simplicity and illustrative purposes, the principles of the present disclosure are described by referring mainly to embodiments and examples thereof. In the following description, numerous specific details are outlined to provide an understanding of the embodiments and examples. It will be apparent, however, to one of ordinary skill in the art, that the embodiments and examples may be practiced without limitation to these specific details. In some instances, well-known methods and/or structures have not been described in detail so as not to unnecessarily obscure the description of the embodiments and examples. Furthermore, the embodiments and examples may be used together in various combinations.

Throughout the present disclosure, the terms "a" and "an" are intended to denote at least one of a particular element. As used herein, the term "includes" means includes but not limited to, the term "including" means including but not limited to.

Embodiments are disclosed herein to enable authentication of content based on evidence collected from authenticated data sources.

A transformer-based content processing apparatus and methodology are disclosed herein that enables identification of misinformation or inauthentic data, e.g., content in which an image does not match a textual description corresponding to the image, artificially generated content etc. The content processing apparatus and methodology disclosed herein can also be employed for securing computer networks or other resources, requiring authorizing credentials including not only text-based credentials such as username/passwords but can also other types of credentials, e.g., images such as biometric data, etc.

According to examples, the transformer-based processing apparatus disclosed herein receives a content for verification, accesses authenticated data sources to retrieve evidence which may be used to determine the veracity or to authenticate the received content and provides multiple probabilities corresponding to multiple content categories for the received content, in which the multiple content categories include an authentic content category, an inauthentic content category, and an indeterminate content category. In some examples, the transformer-based processing apparatus selects one of the multiple content categories with a highest probability as a most probable content category for the received content.

Authentic content is content including information that has been verified by the evidence retrieved from the authenticated data sources. If the information conveyed in the content received for verification is proved to be false or otherwise incorrect, then the content received for verification is determined to be inauthentic content. If sufficient evidence content cannot be retrieved from the authenticated data sources, the received content is designated as being indeterminate.

The content received for verification can include one or more of text and images. In some examples, the transformer-based content processing apparatus disclosed herein implements text and/or image searches to identify the evidence content from the authenticated data sources. In addition, the transformer-based content processing apparatus uses CLIP models to extract text and/or image features from the received content and the evidence content. The extracted features may be provided to GRU models for the generation of representations of the received content and the evidence content. GRUs are a type of Recurrent Neural Networks (RNNs) that manage sequential data. The basic idea behind the GRU architecture is based on gating mechanisms to selectively update the hidden state of the network at each time step. The gating mechanisms are used to control the flow of information in and out of the network. The GRU has two gating mechanisms, called the reset gate and the update gate. The reset gate determines how much of the previous hidden state should be forgotten, while the update gate determines how much of the new input should be used to update the hidden state. The output of the GRU is calculated based on the updated hidden state. When used according to the embodiments disclosed herein, the hidden states of the GRU are dropped and only the output of the last layer of the GRU is used for further processing.

In an example, a text GRU model generates a textual representation while an image GRU model generates an image representation, in which the text and image representations have the dimensionality '[batch, feature]'. In addition, both the text and image representations from evidence are enhanced through a series of operations: addition and normalization, followed by a dropout layer for regularization, a projection transformation, another addition and normalization, and finally a feed forward network to refine the features further. The enhanced evidence representations are concatenated with the post text and image features, resulting in a single vector for each data instance that combines all four sources of information. The concatenated vector is normalized, then passed through a linear layer (fully connected layer) to produce logits, which are unnormalized predictions that can be further processed through a softmax function to obtain probabilities for classification. By way of example, an RNN model integrates and processes multimodal data (text and images from two different contexts: evidence and posts) using GRUs and a series of normalization, regularization, and linear transformations to produce a final prediction. The emphasis on combining evidence and post features for classification ensured that it's tailored for tasks requiring analysis of both content types for fact-checking verification.

The transformer-based content processing apparatuses and methods disclosed herein provide a technical solution to the technical problem of processing images and corresponding textual data simultaneously for authentication. For instance, the simultaneous processing enables verification of content that includes one type of data, e.g., an image, using content that may include another type of data, e.g., text. Particularly, the transformer-based content processing apparatus disclosed herein integrates pre-trained embeddings for both text and images generated by the CLIP models with GRU models capable of classifying multimodal content by comparing the multimodal content against pertinent textual and visual evidence. The inclusion of the GRU model enables improvement in the accuracy of categorization of the received content over established benchmark accuracy. Accurate categorization of the content may enhance security and may enable relatively quicker verification of the content, which may enable efficient usage of computational resources in verifying the content.

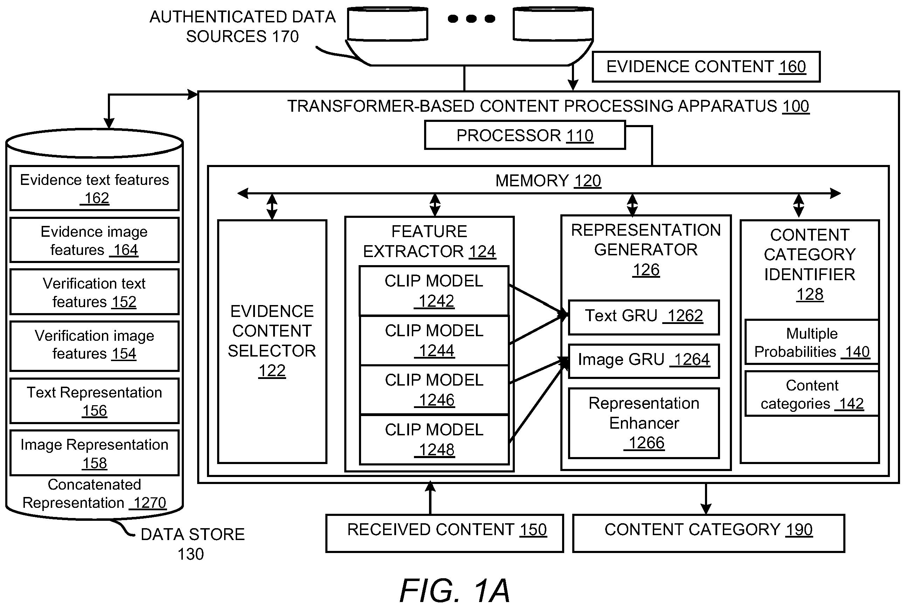

FIG. 1A shows a block diagram of a transformer-based content processing apparatus 100 (hereinafter referred to as 'the content processing apparatus 100'), that determines the authenticity or veracity of content, in accordance with an embodiment of the present disclosure. In operation, the content processing apparatus 100 receives content for verification (referred to hereinafter as 'received content 150') and determines if the information conveyed in the received content 150 is obtained from an authentic information source. The received content 150 can include, without limitation, a posted content piece such as an article published in an online source, a blog post, or other social media post, a message received in a chat application, an email, etc. The received content 150 can include one or more textual data, audio data, and video/image data. The content processing apparatus 100 accesses evidence content 160 to compare the received content 150 and hence determines the authenticity of the data in the received content 150.

The content processing apparatus 100 includes a processor 110, a data store 130, and a memory 120 that stores processor-executable modules and/or instructions that enable the verification/authentication of content as described herein. As shown, the memory 120 includes an evidence content selector 122, a feature extractor 124, a representation generator 126, and a content category identifier 128. The received content 150 can be transmitted to the content processing apparatus 100 by a requester who may include a human user or an automated process being implemented by another apparatus (not shown) such as a social media platform.

On obtaining the received content 150, the processor 110 executes the evidence content selector 122 for collecting evidence content 160, (e.g., ground truth text/images) corresponding to the received content 150 from one or more authenticated data sources 170. In an example, the authenticated data sources 170 include internal databases or external data sources such as official channels of organizations, internet portals, domain-based databases, subscription databases, etc., which are vetted and configured on the apparatus 100 as providing authentic information to enable evidence content selection. The requestor may also provide the evidence content 160 in an example. Furthermore, embodiments of the content processing apparatus 100 can also be employed for securing resources in which the received content 150 to be verified is user authentication data including textual user authentication data and image user authentication data such as usernames/passwords with images including biometric data such as retina or fingerprint images. The evidence content 160 can also include user credentials recorded into the authenticated data sources 170.

The evidence content selector 122 includes instructions that the processor 110 may execute to implement text-matching and/or image-matching techniques to search for and extract the evidence content 160 from the authenticated data sources 170. In an example, the processor 110 can select more than one content piece as the evidence content 160 and the received content 150 can be matched with each of the selected content pieces for authentication. If no matching evidence content is identified from the authenticated data sources 170, then the received content 150 may be rejected as being unverifiable.

According to examples, the evidence content 160 and the received content 150 are provided to the feature extractor 124 for extraction of features or embeddings. The feature extractor 124 implements at least one Contrastive Language-Image Pre-Training (CLIP) model 1242 for feature extraction. CLIP's embeddings for images and text share the same space, enabling direct comparisons between the two modalities. In an example, multiple CLIP models extract features of different content pieces as described *infra.* The feature extractor 124 includes at least four CLIP models 1242, 1244, 1246, and 1248 to generate embeddings for the evidence content 160 and the received content 150. In particular, the CLIP models 1242 and 1244 can be used to generate the evidence text features 162 and the verification text features 152 respectively while the CLIP models 1246 and 1248 can be used to generate the evidence image features 164 and the verification image features 154 respectively. A CLIP model is a neural network that establishes a multi-modal embedding space through the joint training of an image encoder and text encoder.

The processor 110 executes the feature extractor 124 to extract evidence text features (i.e., features of textual data from the evidence content 160) using, for example, an input dictionary from one or more of the authenticated data sources 170. The evidence text features 162 have dimensions [seq_len, batch, feature]', indicating sequence length, batch size, and feature dimensionality, respectively. The processor 110 also executes the feature extractor 124 to extract evidence image features 164 from the input dictionary (not shown). The evidence image features 164 have a similar format as the evidence text features 162 described above. Similarly, the processor 110 extracts the verification text features 152 of the textual data of the received content 150 are similarly extracted and adjusted to have dimensions '[batch, feature]' by removing the sequence dimension, assuming the value of the sequence dimension is 1 and the verification image features 154 of the image data in the received content 150 are adjusted to match post text features' dimensions.

The embeddings or the features of the evidence content 160 and the received content 150 are provided to the representation generator 126. The representation generator 126 includes GRUs which, as discussed herein, are a type of neural network that manages sequential data. A text GRU 1262 processes the text data and an image GRU 1264 processes the image data of the received content 150 and the evidence content 160. In an example, the text GRU 1262 and the image GRU 1264 can be based on similar architecture but the input data sources are different so that the text GRU 1262 is trained on text data while the image GRU 1264 is trained on image data.

The evidence text features 162 and the verification text features 152 generated by the respective CLIP models 1242 and 1244 are provided to the text GRU 1262. The evidence image features 164 and the verification image features 154 are provided to the image GRU 1264. In an example, the last output from the GRUs 1262 and 1264 are stored as text representation 156 and image representation 158 respectively corresponding to the received content 150 and the evidence content 160. The representation generator 126 also includes a representation enhancer 1266 to enhance the representations 156 and 158 via a series of operations.

The enhanced representations are provided to the content category identifier 128, which the processor 110 executes to output a selected content category 190 from the multiple probabilities 140 resulting from the verification of the received content 150. The content category 190 associated with a maximum probability from the multiple probabilities 140 is selected for categorization of the received content 150. The multiple probabilities 140 correspond to at least three content categories 142 including an authentic content category indicating that the received content 150 is authentic, an inauthentic content category indicating that the received content 150 is not authentic or is a manipulated content/false rumor, and an indeterminate content category indicating that the authenticity of the received content 150 cannot be determined. In an example, the multiple probabilities 140 can be displayed via a user interface (not shown), for example, when the requester is a human user. In an example, the multiple probabilities 140 resulting from the verification can be used to enable downstream processes to publish the authenticated content or suppress the unauthentic content from being published, or deny a user/process access to resources if the apparatus 100 is used for implementing a security procedure.

With respect to FIG. 1A, the processor 110 is a semiconductor-based microprocessor, a central processing unit (CPU), an application-specific integrated circuit (ASIC), a field-programmable gate array (FPGA), and/or other hardware device. The memory 120, which may also be termed a computer-readable medium and is, for example, a Random Access memory (RAM), an Electrically Erasable Programmable Read-Only Memory (EEPROM), a storage device, or the like. In some examples, the memory 120 is a non-transitory computer-readable storage medium, where the term "non-transitory" does not encompass transitory propagating signals. In any regard, the memory 120 may have stored thereon machine-readable instructions executable by the processor 110. Similarly, the data store 130 may also be a Random Access memory (RAM), an Electrically Erasable Programmable Read-Only Memory (EEPROM), a storage device, or the like.

Although the content processing apparatus 100 is depicted as having a single processor 110, it should be understood that the content processing apparatus 100 may also include additional processors and/or cores without departing from the scope of the content processing apparatus 100. In this regard, references to a single processor 110 as well as to a single memory 120 may be understood to additionally or alternatively pertain to multiple processors and/or multiple memories. In addition, or alternatively, the processor 110 and the memory 120 may be integrated into a single component, e.g., an integrated circuit on which both the processor 110 and the memory 120 may be provided. In addition, or alternatively, the operations described herein as being performed by the processor 110 can be distributed across multiple corresponding apparatuses and/or multiple processors.

In different examples, the content processing apparatus 100 is a computing device such as a server, a laptop computer, a desktop computer, a tablet computer, and/or the like. In some examples, the content processing apparatus 100 is part of cloud infrastructure, a virtual machine in the cloud infrastructure, a computing device of an Information technology (IT) professional of the cloud infrastructure, a computing device of an IT professional contracted by the service provider of the cloud infrastructure, etc. Furthermore, the various communications exchanged by the different apparatuses in a network environment, e.g., to retrieve evidence content 160 and/or provide the output, e.g., multiple probabilities 140 to a requesting user, can be network messages configured to comply with protocols implemented by a network environment including the content processing apparatus 100.

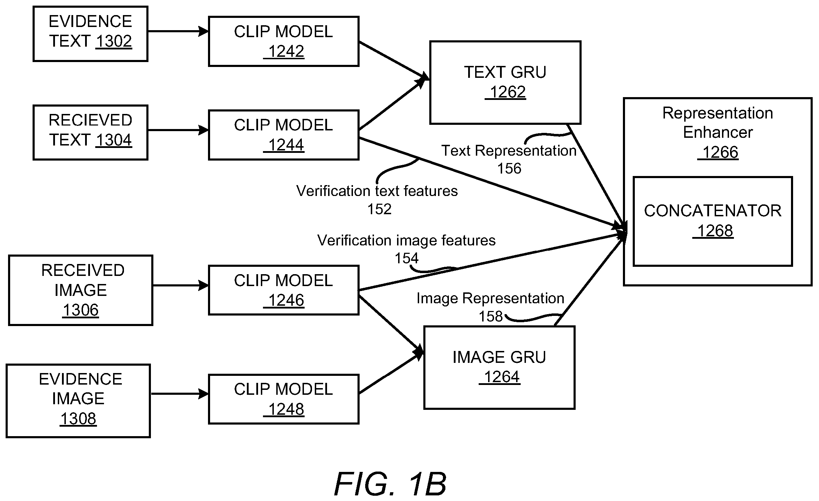

FIG. 1B shows further details of the arrangement of the various models in the content processing apparatus 100 shown in FIG. 1A, in accordance with an embodiment of the present disclosure. As shown, each of the CLIP models 1242, 1244, 1246, and 1248 processes a corresponding input for feature extraction. Particularly, the CLIP model 1242 processes evidence text 1302, i.e., textual data from the evidence content 160, the CLIP model 1244 processes received text 1304 which includes textual data from the received content 150, the CLIP model 1246 processes received image 1306 from the received content 150, while the CLIP model 1248 processes evidence image 1308 from the evidence content 160.

The evidence text features 162 from the CLIP model 1242 and the verification text features 152 from the received content 150 are provided to the text GRU 1262. The evidence image features 164 and the verification image features 154 are provided to the image GRU 1264. The outputs from the respective last layers of the text GRU 1262 and the image GRU 1264 including the text representation 156 and the image representation 158 are provided to a concatenator 1268 included, for example, in the representation enhancer 1266. Additionally, the verification text features 152 and the verification image features 154 are also directly provided by the CLIP models 1244 and 1246 to the concatenator 1268. The resultant concatenated representation 1270 is used to obtain the multiple probabilities 140 for example, via being processed by a feedforward layer as detailed *infra.*

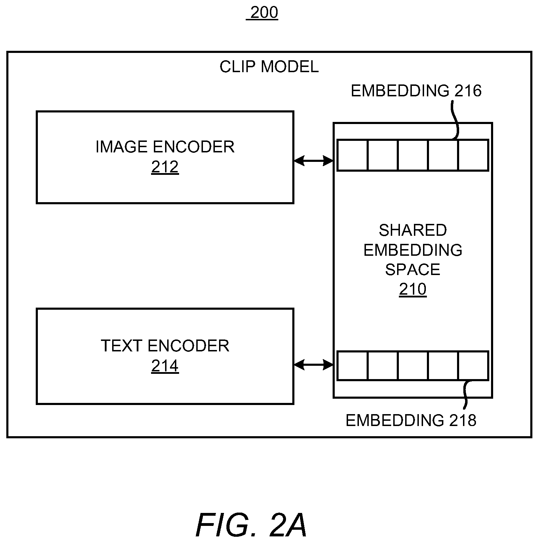

FIG. 2A shows a block diagram of a CLIP model 200, in accordance with an embodiment of the present disclosure. The CLIP model 200 is based on a dual-encoder architecture that uses two separate neural networks to process text and images. One network forms an image encoder 212 (for instance, a CNN or a vision transformer) encodes the images. Another network, e.g., text encoder 214 (for instance, a transformer) encodes the text. The networks, e.g., embeddings 216 and 218, map images and text to a shared embedding space 210. The image encoder 212 and the text encoder 214 are trained jointly on common training data that includes images and corresponding text. The image encoder 212 is trained to extract salient features of input images. The image encoder 212 can take images as input and outputs a multi-dimensional vector representation of the extracted features or embedding. During training, the CLIP model 200 uses, for instance, a contrastive learning objective in which the CLIP model 200 learns to bring embeddings of matching text-image pairs closer together in the shared embedding space while pushing apart the embeddings of non-matching pairs. Such similarity and dissimilarity indication may be produced by maximizing the similarity of correct pairs and minimizing the similarity of incorrect pairs. The CLIP model 200 implements zero-shot learning because the text and images share the same embedding space 210 and the CLIP model 200 can generalize to new tasks without additional training. For example, the CLIP model 200 can understand and compare new text descriptions with new images by projecting both into the shared space and finding the closest matches. The shared embedding space210 in the CLIP model 200 allows for direct comparison between text and images, enabling powerful capabilities like zero-shot image classification, where the model can classify unseen images based on textual descriptions.

In an example, the image encoder 212 can extract image features using Convolutional Neural Networks (CNNs). The text encoder 214 encodes the semantic meaning of the textual description corresponding to an image provided to the image encoder 212. The text encoder 214 takes text as input and produces another multi-dimensional vector or embedding as output. The text encoder 214 is generally based on Transformer architecture such as Bidirectional Encoder Representations from Transformers (BERT). The image encoder 212 and the text encoder 214 transform the input data (text or image) into high-dimensional vectors, known as embeddings, e.g., embeddings 216, and 218. Each piece of text and each image is represented as a point in a high-dimensional space. Accordingly, the embeddings from both networks are mapped into in the shared embedding space 216. This means that the dimensions and the scale of the vectors are aligned such that similar concepts (whether from text or images) are close to each other in this space..

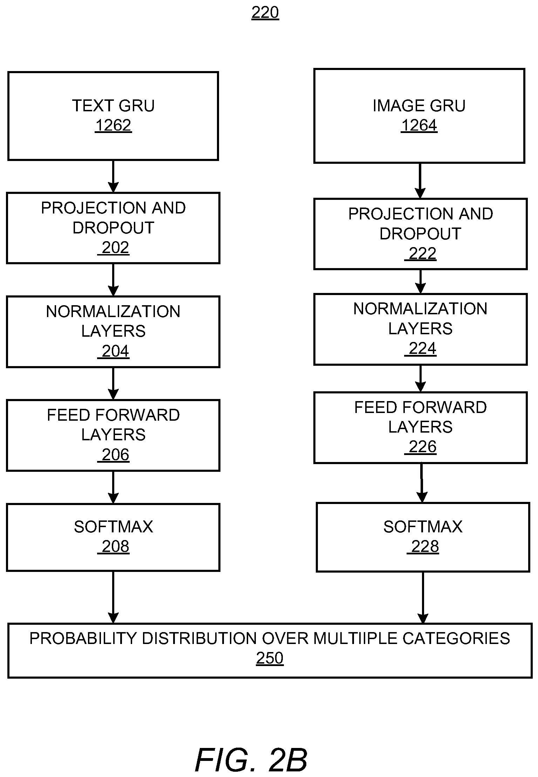

FIG. 2B shows a block diagram 220 of the series of operations carried out to enhance the representations shown in FIG. 2A, in accordance with an embodiment of the present disclosure. The GRU model integrates and processes multimodal data (text and images from two different contexts, e.g., the evidence content 160 and the received content 150) using GRUs and a series of normalization, regularization, and linear transformations to produce a final prediction. The emphasis on combining features of the evidence content 160 and the received content 150 for classification ensures that the GRU model is tailored for tasks requiring analysis of both text and image content types for verification.

The text GRU 1262 receives the embeddings related to the evidence content 160 or the received content 150. The corresponding representations are generated respectively for the evidence content 160 and the received content 150 by processing the text and the images therein by the text GRU 1262 and the image GRU 1264 respectively through the projection and dropout layers 202, 222. The output of the projection and dropout layers 202 and 222 are further processed via normalization layers 204 and 224, and feed forward layers 206 and 226. The output of the hidden layers is dropped and the outputs of the last layers, e.g., the softmax layers 208 and 228, are obtained as the probability distribution over multiple categories 250. The multiple content categories 142 include, for instance, authentic content, inauthentic content, and indeterminate content. In an example, the enhanced representations include vectors having the same dimensions so that further operations such as concatenation and similarity determination may be executed. Generally, the output is taken directly from the text GRU 1262 and the image GRU 1264 for verification. However, the content processing apparatus 100 uses GRUs that are further modified with additional layers so that further complexity is added to the GRU models which in turn provides for more hyperparameters to describe the representations.

A portion of the Python^{®} code of the series of operations to generate the enhanced representations is shown below by way of illustration:

```
 2 RumorDetectClipGRU(
 3 (text gru): GRU(768, 768)
 4 (img_gru): GRU(768, 768)
 5 (proj 1): Linear(in_features=768, out_features=768, bias=True)
 6 (proj2): Linear(in_features=768, out_features=768, bias=True)
 7 (dropout1): Dropout(p=0.2, inplace=False)
 8 (dropout2): Dropout(p=0.2, inplace=False)
 9 (ln1): LayerNorm((768,), eps=1e-05, elementwise_affine=True)
 10 (ln2): LayerNorm((768,), eps=1e-05, elementwise_affine=True)
 11 (ln3): LayerNorm((3072,), eps=1e-05, elementwise_affine=True)
 12 (ffwd1): FeedForward(
 13 (linear1): Linear(in_features=768, out_features=3072, bias=True)
 14 (dropout): Dropout(p=0.2, inplace=False)
 15 (linear2): Linear(in_features=3072, out_features=768, bias=True)
 16 )
 17 (ffwd2): FeedForward(
 18 (linear1): Linear(in_features=768, out_features=3072, bias=True)
 19 (dropout): Dropout(p=0.2, inplace=False)
 20 (linear2): Linear(in_features=3072, out_features=768, bias=True)
 21 )
 22 (fc): Linear(in_features=3072, out_features=3, bias=True)
 23 )
```

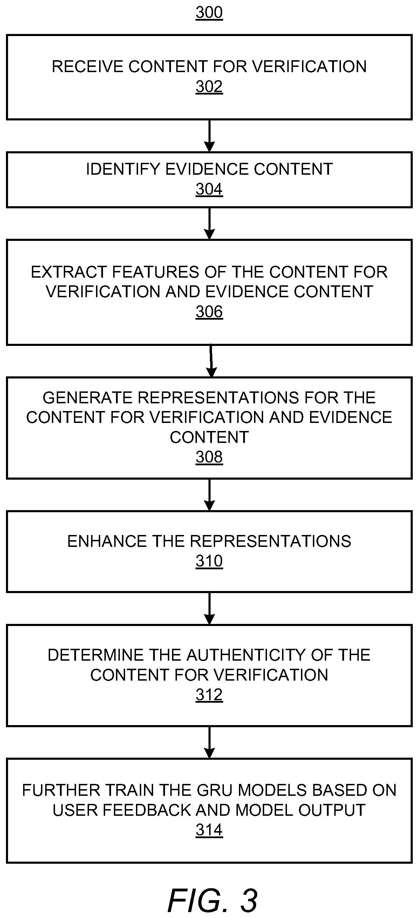

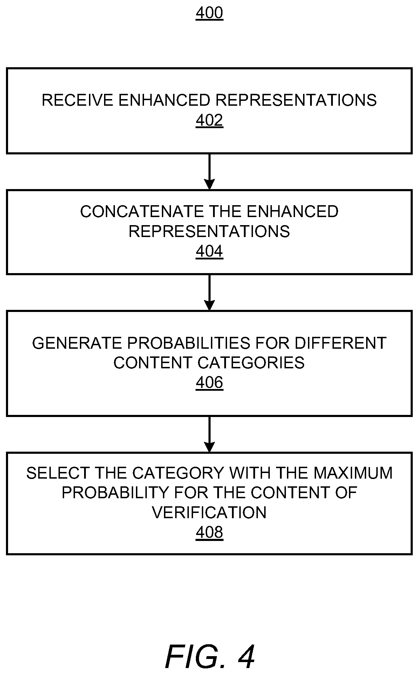

Various manners in which the processor 110 of the content processing apparatus 100 operates are discussed in greater detail with respect to the methods 300 and 400 respectively depicted in FIGS. 3 and 4. FIG. 3 shows flowchart of a method 300 of authenticating content as implemented by the content processing apparatus 100 in accordance with embodiments of the present disclosure. FIG. 4 shows flowchart of the method 400 of authenticating received content as implemented by the content category identifier 128 in accordance with an embodiment of the present disclosure. It should be understood that methods 300 and 400 may include additional operations and that some of the operations described therein may be removed and/or modified without departing from the scope of methods 300 and 400. The description of the methods 300 and 400 is made with reference to the features depicted in FIG. 1A for purposes of illustration.

Referring to FIG. 3, at 302, the processor 110 obtains the received content 150 from one of a human user or an automated process executed by a processor. At 304, the processor 110 retrieves the evidence content 160 or the ground truth from the authenticated data sources 170 by executing the evidence content selector 122. As the content processing apparatus 100 can be configured to receive different types of content, e.g., blog posts, websites, product information, user credentials, etc., the evidence content selector 122 can include instructions, which when executed by the processor 110 cause the processor 110 to access a particular data source from the authenticated data sources 170 for evidence content identification.

At 306, the processor 110 extracts features or embeddings from the received content 150 and the evidence content 160 by executing the feature extractor 124 which includes a plurality of CLIP models, e.g., the CLIP models 1242, 1244, 1246, and 1248. As the received content 150 and the evidence content 160 can contain text and images, the processor 110 extracts text and image features accordingly to generate the evidence text features 162, evidence image features 164, verification text features 152 and the verification image features 154. The CLIP models 1242 and 1244 can be trained to extract textual features and the image features respectively from the evidence content 160 while the CLIP models 1246 and 1248 can be trained to extract the textual features and the image features respectively from the received content 150. The evidence text features 162 can have at least two dimensions such as but not limited to '[seq_len, batch, feature]', indicating sequence length, batch size, and feature dimensionality, respectively. The received content 150 can have verification text features 152 '[batch, feature]' by removing the sequence dimension, e.g., assuming it is 1. Similarly, the evidence image features 164 have the same format as evidence text features while the verification image features 154 are adjusted to match the dimensions of the verification text features 152.

At 308, the processor 110 generates representations of the received content 150 and the evidence content 160 by executing the representation generator 126. The processor 110 executes the text GRU 1262 and extracts the output of the last layer of the text GRU 1262 as the text representation 156 for the evidence content and the received content 150. The processor 110 extracts the output of the last layer of the image GRU 1264 as the image representation 158 of the evidence content 160 and the received content 150. The processor 110 thus generates representations from each for the various content pieces which include the received content 150 and the evidence content 160 only from the outputs of the last layers of the text GRUs 1262 and the image GRU 1264 while discarding the hidden states. The processor 110 further enhances the representations of the received content 150 and the evidence content 160 at 310 by executing the representation enhancer 1266 which implements a series of operations on the representations as detailed herein.

The processor 110 receives the enhanced representations and determines the authenticity of the received content, 150 at 312. The enhanced representations are provided to the content category identifier 128 executed by the processor 110 for generating multiple probabilities that the received content 150 can be categorized under multiple content categories. The processor 110 then selects one of the multiple content categories with the highest probability as the content category for the received content. For example, the received content 150 can be classified into one of the three content categories including authenticated content, unauthenticated content, and content for which authenticity cannot be determined.

As GRUs are RNNs, the model output can be used for further training the GRU models. At 314, the processor 110 further trains the text GRU 1262 and the image GRU 1264 based at least on the model output produced at 312. For example, user feedback can be collected for the determination made at 312 and the user feedback can be employed to further train the GRU models with reinforcement learning methodology.

Turning now to FIG. 4, at 402, the processor 110 receives the enhanced text representation 156 and image representation 158 from the additional layers of the text GRU 1262 and the image GRU 1264. At 404, the processor 110 concatenates the enhanced representations. As mentioned herein, the enhanced representations can include high-dimensional vectors that can be concatenated. The processor 110 generates a common vector representation of the evidence content 160 and the received content 150 by concatenating the text representation 156 and the image representation 158 obtained from the last layers of the text GRU 1262 and the image GRU 1264. At 406, the processor 110 determines the probabilities from among the multiple content categories that include authenticated content, rumor/unverified/inauthentic content, and content that cannot be verified. At 408, the processor 110 compares the multiple probabilities 140 and categorizes the received content 150 into a content category having the highest probability.

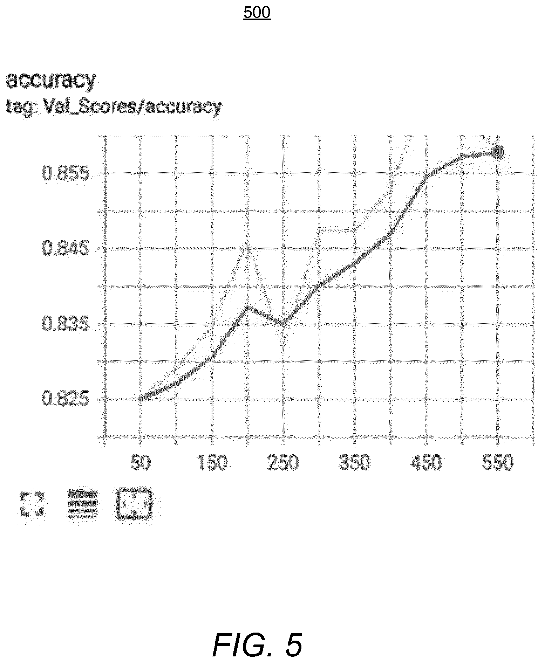

FIG. 5 shows a graph 500 of the accuracy of the GRU models in authenticating content, in accordance with the embodiments of the present disclosure. As seen from the graph 500, by using the GRU models 1262 and 1264 as discussed herein, the content processing apparatus 100 achieves about an 85% accuracy in categorizing content. This is a much higher accuracy as compared to standard models used in the industry, which is about 69% accuracy. Therefore, the use of GRU models in combination with the CLIP models disclosed herein helps to improve the accuracy of automated content categorizing or content authenticating apparatuses.

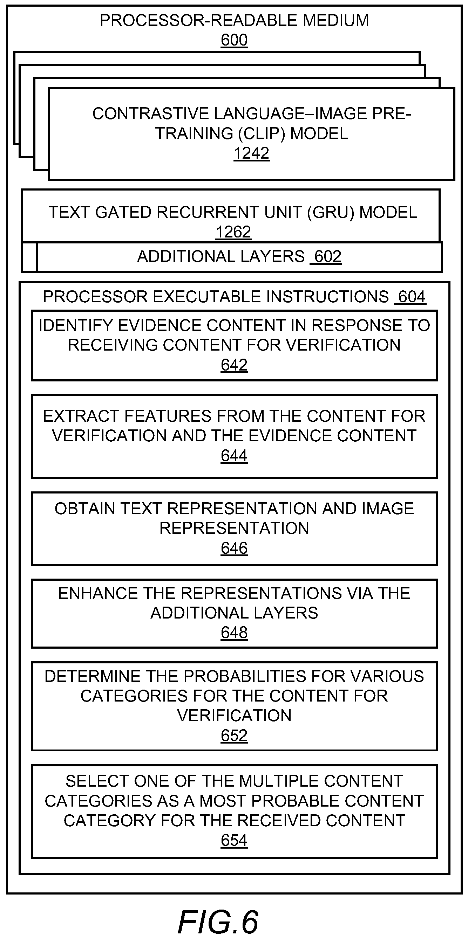

Turning now to FIG. 6, there is shown a block diagram of a processor-readable medium 600 (which may also be termed a computer-readable medium 600) that has stored thereon certain data structures, e.g., one or more CLIP models 1242-1248 and GRUs, e.g., the text GRU 1262 and the image GRU 1264 and computer-readable or processor-readable instructions 604 for enabling the content processing apparatus 100 to determine the authenticity of the received content 150, in accordance with an embodiment of the present disclosure. It should be understood that the processor-readable medium 600 depicted in FIG. 6 may include additional instructions and that some of the instructions described herein may be removed and/or modified without departing from the scope of the processor-readable medium 600 disclosed herein. In some examples, the processor-readable medium 600 is a non-transitory processor-readable medium, in which the term "non-transitory" does not encompass transitory propagating signals.

As shown in FIG. 6, the processor-readable medium 600 has stored thereon processor-readable instructions 604 that a processor, such as the processor 110 of the content processing apparatus 100 depicted in FIG. 1 executes. The processor-readable medium 600 is an electronic, magnetic, optical, or other physical storage device that contains or stores executable instructions. The processor-readable medium 600 is, for example, Random Access memory (RAM), an Electrically Erasable Programmable Read-Only Memory (EEPROM), a storage device, an optical disc, and the like.

The processor, e.g., the processor 110, executes the instructions 642 via executing the evidence content selector 122, to identify the evidence content 160 from the authenticated data sources 170 in response to receiving the received content 150.

The processor executes instructions 644 via execution of the feature extractor 124, to extract features of the received content 150 and the evidence content 160. The features that are extracted by the CLIP models 1242-1248 implemented by the feature extractor 124 can include evidence text features 162, evidence image features 164, verification text features 152 and verification image features 154.

The processor executes instructions 646, via execution of the representation generator 126, to obtain the text representation 156 and the image representation 158 corresponding to the received content 150 and the evidence content 160. The representation generator 126 implements the text GRU 1262 and the image GRU 1264 for producing representations for content items.

The processor executes instructions 648, which are included in the representation enhancer 1266 to enhance the representations via a series of operations implemented by the additional layers 602 of the text GRU 1262 and the image GRU 1264. In an example, the series of operations can include a first series of operations including addition and normalization, regularization, and a projection transformation. The series of operations can also include a second series of operations following the first series of operations, in which the second series of operations includes further addition and normalization.

The processor executes instructions 652 to determine the probabilities of various content categories for categorization of the received content 150. In an example, the content categories include authentic content, inauthentic content, and indeterminate content for which no category can be assigned, e.g., due to insufficient evidence content. In addition, the processor executes instructions 654 to select one of the multiple content categories with a highest probability as a most probable content category for the received content.

Although described specifically throughout the entirety of the instant disclosure, representative examples of the present disclosure have utility over a wide range of applications, and the above discussion is not intended and should not be construed to be limiting, but is offered as an illustrative discussion of aspects of the disclosure.

What has been described and illustrated herein is an example of the disclosure along with some of its variations. The terms, descriptions, and figures used herein are set forth by way of illustration only and are not meant as limitations. Many variations are possible within the scope of the disclosure, which is intended to be defined by the following claims - - and their equivalents -- in which all terms are meant in their broadest reasonable sense unless otherwise indicated.

**The following is a list of further preferred embodiments of the invention:**
Embodiment 1. A transformer-based content processing apparatus, comprising:
   a processor; and
   a memory on which are stored processor-readable instructions that when executed by the processor, cause the processor to:
      provide features of evidence content and content received for verification to a Gated Recurrent Unit (GRU) model;
      execute the GRU model to:
         extract outputs corresponding to the evidence content and the received content from a last layer of the GRU model as corresponding representations of the evidence content and the received content;
         enhance the corresponding representations via a series of operations;
         generate multiple probabilities corresponding to multiple content categories for the received content from the corresponding representations; and
         select one of the multiple content categories with a highest probability as a most probable content category for the received content.
Embodiment 2. The transformer-based content processing apparatus of embodiment 1, wherein the processor-readable instructions further cause the processor to:
   receive the content for verification from a requester; and
   identify the evidence content corresponding to the received content from authenticated data sources.
Embodiment 3. The transformer-based content processing apparatus of embodiment 1, wherein to provide the features, the processor-readable instructions further cause the processor to:
   extract, using a Contrastive Language-Image Pre-training (CLIP) model, features of the evidence content and the received content.
Embodiment 4. The transformer-based content processing apparatus of embodiment 1, wherein the corresponding representations have at least two dimensions, a batch, and at least one feature.
Embodiment 5. The transformer-based content processing apparatus of embodiment 4, wherein the series of operations comprise a first series of operations including addition and normalization, regularization, and a projection transformation.
Embodiment 6. The transformer-based content processing apparatus of embodiment 5, wherein the series of operations further comprise a second series of operations following the first series of operations, wherein the second series of operations include further addition and normalization followed by refinement of the features.
Embodiment 7. The transformer-based content processing apparatus of embodiment 1, wherein the evidence content and the received content include one or more of text data and image data.
Embodiment 8. The transformer-based content processing apparatus of embodiment 7, wherein the GRU model includes two GRU models including a text GRU model that processes the text data and an image GRU that processes the image data.
Embodiment 9. The transformer-based content processing apparatus of embodiment 8, wherein to extract the corresponding representations, the processor-readable instructions further cause the processor to:
   extract an output of the last layer of the text GRU as a text representation of the corresponding representations for the evidence content and the content for verification; and
   extract an output of the last layer of the image GRU as an image representation of the corresponding representations for the evidence content and the content for verification.
Embodiment 10. The transformer-based content processing apparatus of embodiment 9, wherein to generate the multiple probabilities, the processor-readable instructions further cause the processor to:
   generate a concatenated representation of the evidence content and the content for verification by concatenating the text representation and the image representation.
Embodiment 11. The transformer-based content processing apparatus of embodiment 1, wherein the multiple content categories include an authentic content category, an inauthentic content category and an indeterminate content category.
Embodiment 12. The transformer-based content processing apparatus of embodiment 1, wherein the content for verification is a social media post and the content for verification includes only image data and the evidence content includes only text data.
Embodiment 13. The transformer-based content processing apparatus of embodiment 1, wherein the content for verification comprises user authentication data including textual user authentication data and image user authentication data.
Embodiment 14. The transformer-based content processing apparatus of embodiment 1, wherein the processor-readable instructions further cause the processor to:
   receive user feedback on the generated multiple probabilities; and
   train the GRU model on the user feedback.
Embodiment 15. A processor-executable method of authenticating content, the method comprising:
   receiving, by a processor, content for verification;
   identifying, by the processor, evidence content to be used for authenticating the received content;
   extracting, by the processor, features of the content for verification and the evidence content;
   executing, by the processor, a Gated Recurrent Unit (GRU) model that processes the features;
   extracting, by the processor as outputs from a last layer of the GRU model, a text representation and an image representation corresponding to the evidence content and the content for verification;
   enhancing, by the processor via execution of a series of operations by additional layers of the GRU model, the text representation and an image representation; and
   determining, by the processor based on the enhanced text and image representations, probabilities that the content for verification is authentic content or inauthentic content.
Embodiment 16. The processor-executable method of embodiment 15, wherein extracting the features further comprises:
   executing, by the processor, a plurality of Contrastive Language-Image Pre-training (CLIP) models that extract the features from textual data and image data of the received content and the evidence content.
Embodiment 17. The processor-executable method of embodiment 16, wherein executing the GRU model further comprises:
   executing, by the processor, a plurality of GRU models including a text GRU model that processes textual data of the evidence content and the received content and an image GRU model that processes image data of the evidence content and the received content.
Embodiment 18. The processor-executable method of embodiment 15, wherein executing the series of operations by the additional layers of the GRU model further comprises:
   further executing, by the processor, a linearization operation, a normalization operation followed by an operation by a feedforward layer on the text representation and an image representation.
Embodiment 19. A computer-readable medium storing:
   a Contrastive Language-Image Pre-training (CLIP) model that extracts features of content for verification and corresponding evidence content,
   a Gated Recurrent Unit (GRU) model that processes the features, and
   processor-executable instructions that cause a processor to:
      extract the features of content received for verification and the corresponding evidence content;
      obtain as image representation and text representation, outputs from a last layer of the GRU model upon the GRU model processing the features;
      enhance the text representation and the image representation via a series of operations executed by additional layers of the GRU model; and
      generate a probability distribution over multiple content categories for the received content from the enhanced text representation and image representation; and
      select one of the multiple content categories with a highest probability as a most probable content category for the received content.
Embodiment 20. The computer-readable medium of embodiment 19, wherein the GRU model comprises additional layers including linearization layers, dropout layers, normalization layers, feedforward layers, and a softmax layer.

## Claims

1. A transformer-based content processing apparatus, comprising:
a processor; and
a memory on which are stored processor-readable instructions that when executed by the processor, cause the processor to:
provide features of evidence content and content received for verification to a Gated Recurrent Unit (GRU) model;
execute the GRU model to:
extract outputs corresponding to the evidence content and the received content from a last layer of the GRU model as corresponding representations of the evidence content and the received content;
enhance the corresponding representations via a series of operations;
generate multiple probabilities corresponding to multiple content categories for the received content from the corresponding representations; and
select one of the multiple content categories with a highest probability as a most probable content category for the received content.

2. The transformer-based content processing apparatus of claim 1, at least one of:
wherein the processor-readable instructions further cause the processor to:
receive the content for verification from a requester; and
identify the evidence content corresponding to the received content from authenticated data sources; and
wherein to provide the features, the processor-readable instructions further cause the processor to:
extract, using a Contrastive Language-Image Pre-training (CLIP) model, features of the evidence content and the received content.

3. The transformer-based content processing apparatus of claim 1 or 2, wherein the corresponding representations have at least two dimensions, a batch, and at least one feature.

4. The transformer-based content processing apparatus of claim 3, wherein the series of operations comprise a first series of operations including addition and normalization, regularization, and a projection transformation.

5. The transformer-based content processing apparatus of claim 4, wherein the series of operations further comprise a second series of operations following the first series of operations, wherein the second series of operations include further addition and normalization followed by refinement of the features.

6. The transformer-based content processing apparatus of one of claims 1 to 5, wherein the evidence content and the received content include one or more of text data and image data.

7. The transformer-based content processing apparatus of claim 6, wherein the GRU model includes two GRU models including a text GRU model that processes the text data and an image GRU that processes the image data.

8. The transformer-based content processing apparatus of claim 7, wherein to extract the corresponding representations, the processor-readable instructions further cause the processor to:
extract an output of the last layer of the text GRU as a text representation of the corresponding representations for the evidence content and the content for verification; and
extract an output of the last layer of the image GRU as an image representation of the corresponding representations for the evidence content and the content for verification,
wherein preferably to generate the multiple probabilities, the processor-readable instructions further cause the processor to:
generate a concatenated representation of the evidence content and the content for verification by concatenating the text representation and the image representation.

9. The transformer-based content processing apparatus of one of claims 1 to 8, at least one of:
wherein the multiple content categories include an authentic content category, an inauthentic content category and an indeterminate content category;
wherein the content for verification is a social media post and the content for verification includes only image data and the evidence content includes only text data;
wherein the content for verification comprises user authentication data including textual user authentication data and image user authentication data; and
wherein the processor-readable instructions further cause the processor to:
receive user feedback on the generated multiple probabilities; and
train the GRU model on the user feedback.

10. A processor-executable method of authenticating content, the method comprising:
receiving, by a processor, content for verification;
identifying, by the processor, evidence content to be used for authenticating the received content;
extracting, by the processor, features of the content for verification and the evidence content;
executing, by the processor, a Gated Recurrent Unit (GRU) model that processes the features;
extracting, by the processor as outputs from a last layer of the GRU model, a text representation and an image representation corresponding to the evidence content and the content for verification;
enhancing, by the processor via execution of a series of operations by additional layers of the GRU model, the text representation and an image representation; and
determining, by the processor based on the enhanced text and image representations, probabilities that the content for verification is authentic content or inauthentic content.

11. The processor-executable method of claim 10, wherein extracting the features further comprises:
executing, by the processor, a plurality of Contrastive Language-Image Pre-training (CLIP) models that extract the features from textual data and image data of the received content and the evidence content.

12. The processor-executable method of claim 11, wherein executing the GRU model further comprises:
executing, by the processor, a plurality of GRU models including a text GRU model that processes textual data of the evidence content and the received content and an image GRU model that processes image data of the evidence content and the received content.

13. The processor-executable method of claim 11 or 12, wherein executing the series of operations by the additional layers of the GRU model further comprises:
further executing, by the processor, a linearization operation, a normalization operation followed by an operation by a feedforward layer on the text representation and an image representation.

14. A computer-readable medium storing:
a Contrastive Language-Image Pre-training (CLIP) model that extracts features of content for verification and corresponding evidence content,
a Gated Recurrent Unit (GRU) model that processes the features, and
processor-executable instructions that cause a processor to:
extract the features of content received for verification and the corresponding evidence content;
obtain as image representation and text representation, outputs from a last layer of the GRU model upon the GRU model processing the features;
enhance the text representation and the image representation via a series of operations executed by additional layers of the GRU model; and
generate a probability distribution over multiple content categories for the received content from the enhanced text representation and image representation; and
select one of the multiple content categories with a highest probability as a most probable content category for the received content.

15. The computer-readable medium of claim 14, wherein the GRU model comprises additional layers including linearization layers, dropout layers, normalization layers, feedforward layers, and a softmax layer.
